# EUROPÄISCHE PATENTANMELDUNG

(11) **EP 1 037 080 A1**
(43) Veröffentlichungstag der Anmeldung: **20.09.2000**
(21) Anmeldenummer: 00103180.6
(22) Anmeldetag: 18.02.2000
(51) Int. Cl.: G02B 6/44

(54) **Kabel, insbesondere Unterwasserkabel**

(30) Priorität: 10.03.1999 DE 19910708; 22.06.1999 DE 19928506
(71) Anmelder: NORDDEUTSCHE SEEKABELWERKE GMBH & CO. KG, 26954 Nordenham (DE)
(72) Erfinder: Giebel, Wolfgang, Dipl.-Ing., 82152 Planegg (DE)
(74) Vertreter: Möller, Friedrich, Dipl.-Ing.

(57) **Zusammenfassung**

Kabel, und zwar insbesondere Seekabel (10), verfügen in der Regel über schwarze Außenmäntel (11). Diese sind bei der Verlegung von vor allem im tiefen Wasser auf von Unterwasserfernsehkameras aufgenommenen Fernsehbildern nur schwer oder im Extremfall überhaupt nicht erkennbar.

Das erfindungsgemäße Seekabel (10) weist auf einem Außenmantel (11) eine Markierung durch mindestens einen Längsstreifen (13) auf, der sich von der schwarzen Farbe des Außenmantels (11) durch eine hellere, insbesondere gelbe Farbe kontrastreich abhebt und dadurch auf Fernsehbildern besser sichtbar ist.

## Beschreibung

Die Erfindung betrifft ein Kabel, insbesondere ein Unterwasserkabel, gemäß dem Oberbegriff des Anspruchs 1.

Vor allem Unterwasserkabel (sogenannte Seekabel) müssen während der Verlegung, zu Inspektionszwecken und zum Aufspüren eventueller Fehler beobachtet werden. Dies geschieht unter Wasser mit ferngesteuerten Kameras, die Bilder an Beobachter senden, die sich beispielsweise auf einem Schiff befinden. Die von den Kameras unter Wasser vor allem in großen Tiefen aufgenommenen Bilder lassen selbst dann, wenn die Kamera mit Unterwasserscheinwerfern ausgerüstet ist, das Unterwasserkabel vielfach nur schwer erkennen. Das macht vor allem die Ortung defekter Unterwasserkabel schwierig. Die schwere Erkennbarkeit der Unterwasserkabel auf dem Meeresboden hängt vor allem auch damit zusammen, daß solche Unterwasserkabel üblicherweise einen dunklen, meist schwarzen, Außenmantel aufweisen. Ein solcher dunkler Kabelmantel ist unter Wasser schwer erkennbar, weil er weder im Wasser noch auf dem Meeresboden einen ausreichenden Kontrast liefert.

Ausgehend vom Vorstehenden liegt der Erfindung die Aufgabe zugrunde, ein Kabel, insbesondere ein Unterwasserkabel (Seekabel) zu schaffen, das unter Wasser, und zwar auch in großen Tiefen, gut erkennbar ist.

Ein zur Lösung dieser Aufgabe dienendes Kabel, insbesondere Unterwasserkabel bzw. Seekabel, weist die Merkmale des Anspruchs 1 auf. Durch mindestens eine von außen sichtbare andersfarbige Markierung des Außenmantels wird das Kabel insbesondere im Unterwasserbereich besser sichtbar. Auf Kamerabildern, die selbst in großen Tiefen aufgenommen worden sind, läßt sich das erfindungsgemäße Unterwasserkabel einfacher erkennen, weil durch die andersfarbige Markierung der Außenmantel kontrastreicher wird.

Die Markierung läßt sich auf unterschiedlichste Weise bilden. Vorzugsweise besteht die Markierung aus einem oder auch mehreren in Längsrichtung des Außenmantels des Kabels durchgehend verlaufenden Streifen bzw. Strichen, die vorzugsweise spiralförmig um das Kabel herum verlaufen. Die Markierung aus einem oder mehreren spiralförmigen Längsstreifen oder Längsstrichen auf dem Außenmantel führt dazu, daß die Markierung immer sichtbar ist, und zwar unabhängig davon, von welcher Seite man auf das Kabel schaut. Da sich Seekabel bei der Verlegung um ihre Längsachse drehen, stellen die sich ebenfalls spiralförmig um die Längsachse des Seekabels herumlaufenden Längsstreifen oder Längsstriche eine praktisch immer sichtbare Markierung dar.

Alternativ ist es auch denkbar, die Markierung durch in Querschnittsrichtung um das Kabel laufende Querstreifen oder Querstriche auszubilden. Es handelt sich hierbei dann praktisch um endlose, farbige Ringe um den Außenmantel. Diese sind auch stets sichtbar, und zwar unabhängig von einer Verdrehung des Kabels. Die umlaufenden Querstreifen oder Querstriche haben wie auch die vorstehend genannten spiralförmig um das Kabel herum verlaufenden Längsstriche oder Längsstreifen den Vorteil, daß eine Verdrehung des Seekabels bei der Verlegung nicht sichtbar wird und dadurch den Betrachter nicht stört.

Ebenfalls ist es denkbar, die Markierung aus geraden Längsstreifen oder Längsstrichen zu bilden. Damit jeweils stets ein gerader Längsstreifen oder Längsstrich sichtbar ist, ist eine entsprechende Anzahl von Längsstreifen oder Längsstrichen gleichmäßig auf dem Umfang des Außenmantels verteilt angeordnet.

Die vorstehend erwähnten durchgehenden geraden oder schlangenlinienförmigen Längsstreifen oder Längsstriche bzw. Querstreifen oder Querstriche lassen sich auch aus mindestens einer Reihe von mit Abstand aufeinanderfolgenden Punkten bilden. Die Punkte können beliebige Grundflächen aufweisen, insbesondere rund, elliptisch, quadratisch oder rechteckig sein. Ebenso können die Abstände der Punkte zueinander beliebig sein. In der Regel weisen die Punkte gleiche Abstände auf.

Schließlich ist es auch denkbar, den gesamten Außenmantel mit einer Markierung aus Punkten beliebiger Gestaltung zu versehen. In diesem Falle sind die Punkte auf einem gleichmäßigen Raster angeordnet, das sich vorzugsweise über den gesamten Umfang des Außenmantels erstreckt. Auch ein solches Raster hat den Vorteil, daß die Markierung immer sichtbar ist und Verdrehungen des Seekabels bei der Verlegung nicht in Erscheinung treten und dabei die Beobachtung der Verlegung nicht beeinträchtigen.

Gebildet ist jegliche Art der Markierung im einfachsten Falle durch eine nach der Herstellung des Außenmantels auf denselben aufgespritzte oder aufgedruckte Farbe. Dazu wird eine Farbe verwendet, die dauerhaft seewasserbeständig ist. Es ist auch denkbar, nach dem Aufbringen der die Markierung bildenden Farbe auf den Außenmantel den gesamten Außenmantel mit einer durchsichtigen Schutzschicht zu versehen, die auch die farbige Markierung überdeckt. Dadurch wird der dauerhafte Bestand der durch die Farbe gebildeten Markierung auf dem Außenmantel des Kabels sichergestellt.

Es ist auch möglich, die Markierung bei der Herstellung des Außenmantels aus einem andersfarbigen Kunststoff zu bilden. Der Außenmantel setzt sich dann aus verschiedenfarbigen Kunststoffmaterialien zusammen. Beispielsweise kann dies erreicht werden durch eine Koextrusion des Außenmantels oder durch ein Aufsintern des andersfarbigen Kunststoffs auf die Oberfläche des Außenmantels. Die genannten Arten der Markierung verfügen dann praktisch über die gleiche Seewasserbeständigkeit wie der Außenmantel. Dadurch ist sichergestellt, daß auch nach längerer Zeit die Markierungen des Außenmantels erhalten bleiben und dadurch bei späteren Inspektionen des Seekabels oder zum Aufspüren von zu reparierenden fehlerhaften Stellen zur Verfügung stehen.

Gemäß einer bevorzugten Ausgestaltung der Erfindung weist die jeweilige Markierung eine hellere Farbe als der Außenmantel auf. Vorteilhaft ist es auch, wenn die hellere Farbe der Markierung fluoreszierende Eigenschaften aufweist. Dadurch wird die Markierung des Seekabels auch in großen Tiefen sichtbar, wenn sie durch Scheinwerfer einer Unterwasserkamera angestrahlt wird. Die fluoreszierenden Eigenschaften der Markierung verstärken dann selbst bei schwacher Ausleuchtung und/oder trübem Wasser die deutliche Sichtbarkeit des Seekabels.

Bei Seekabeln mit einem üblicherweise schwarzen Außenmantel wird für die hellere Farbe der Markierung vorzugsweise eine gelbe Farbe gewählt, und zwar insbesondere eine fluoreszierende gelbe Farbe. Es hat sich gezeigt, daß die gelbe Farbe im Zusammenhang mit der schwarzen Farbe des Außenmantels einen vor allem im Unterwasserbereich besonders gut sichtbaren Kontrast bietet.

Die Markierung kann auch gebildet sein, indem Farbpartikel bzw. Farbpigmente dem Rohmaterial des Kunststoffs zur Bildung des Außenmantels zugemischt werden und aus diesem mit den Farbpigmenten versehenen Kunststoff der Außenmantel gebildet wird. Ein solcher Außenmantel verfügt dann über eine im wesentlichen regelmäßige Verteilung farbiger Stellen, insbesondere kleiner Punkte. Die im Außenbereich des Außenmantels liegenden Farbpartikel bzw. Farbpigmente sind dann als eine im wesentlichen gleichmäßige äußere Sprenkelung des ansonsten schwarzen Außenmantels sichtbar. Durch die Einbettung der Farbpartikel bzw. Farbpigmente in das Kunststoffmaterial zur Bildung des Außenmantels ist eine dauerhafte Verbindung der Markierung mit dem Seekabel gewährleistet.

Bei einer alternativen Ausgestaltung des erfindungsgemäßen Seekabels ist die Markierung durch ein auf den Außenmantel aufgebrachtes Netz gebildet. Das Netz umgibt den gesamten Außenmantel und erstreckt sich ununterbrochen in Längsrichtung des Seekabels. Durch das Netz entstehen außen auf dem Außenmantel des Seekabels umlaufende Querstränge und geradlinige Längsstränge mit vorzugsweise rundem Querschnitt, wobei auch andere, zum Beispiel quadratische, Querschnitte denkbar sind. Die sich kreuzenden Längs- und Querstränge bilden bei einem andersfarbenen Netz die Markierung, die vorzugsweise dadurch hergestellt wird, daß sie nach der Fertigstellung des Außenmantels auf diesen aufextrudiert wird.

Bevorzugte Ausführungsbeispiele des erfindungsgemäßen Kabels werden nachfolgend anhand der Zeichnung näher erläutert. In dieser zeigen:
- Fig. 1: einen Abschnitt eines Seekabels in einer Seitenansicht,
- Fig. 2: eine Seitenansicht eines Abschnitts eines Seekabels nach einem zweiten Ausführungsbeispiel der Erfindung,
- Fig. 3: das Seekabel der Fig. 2 in einer um 90° gedrehten Seitenansicht,
- Fig. 4: eine Seitenansicht eines Abschnitts eines Seekabels nach einem dritten Ausführungsbeispiel der Erfindung,
- Fig. 5: eine um 90° gegenüber der Fig. 4 gedrehte Seitenansicht des Seekabels der Fig. 4,
- Fig. 6: einen Abschnitt eines Seekabels nach einem vierten Ausführungsbeispiel der Erfindung, und
- Fig. 7: einen Abschnitt eines Seekabels nach einem fünften Ausführungsbeispiel der Erfindung.

Die Figuren zeigen Kabel zum Unterwassereinsatz, nämlich Seekabel. Die Erfindung läßt sich einsetzen für beliebige Seekabel. Insbesondere können die Seekabel im Inneren eine beliebig aufgebaute Seele aufweisen, die in den Figuren nicht näher dargestellt ist. Beispielsweise kann die Seele sowohl elektrische Leiter als auch Lichtwellenleiter oder Kombinationen aus beiden aufweisen. Darüber hinaus verfügt die Seele über mindestens eine ebenfalls nicht gezeigte Armierung oder Bewehrung zum Schutz gegen mechanische Einflüsse. Die Seele mit der Bewehrung oder Armierung ist umgeben von einem geschlossenen Außenmantel, der im wesentlichen aus Kunststoff besteht. Der Außenmantel ist üblicherweise schwarz.

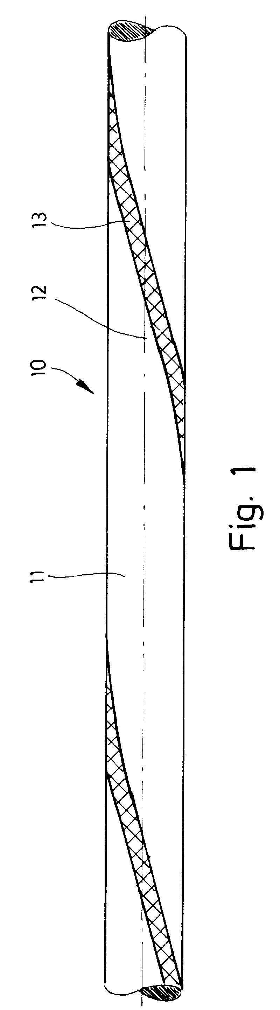

Die Fig. 1 zeigt ein Seekabel 10, dessen Außenmantel 11 mit einer außen sichtbaren Markierung versehen ist. Im gezeigten Ausführungsbeispiel ist die Markierung gebildet aus einem in Längsrichtung, also entlang der Längsmittelachse 12 des Seekabels 10 um den Außenmantel 11 spiralförmig herumlaufenden Längsstreifen 13. Der beim Ausführungsbeispiel der Fig. 1 einzige Längsstreifen 13 weist je nach Durchmesser des Seekabels 10 eine Breite zwischen 1 und 5 mm auf. Vorzugsweise verfügt der Längsstreifen 13 über eine Breite, die etwa einem Viertel bis einem Fünftel des Durchmessers des Seekabels 10 entspricht. Die Steigung der spiralförmigen Wendelung des Längsstreifens 13 um das Seekabel 10 ist im gezeigten Ausführungsbeispiel so gewählt, daß der Längsstreifen 13 auf einer Länge des Seekabels 10, die etwa dem Drei- bis Zehnfachen, vorzugsweise etwa dem Achtfachen, des Durchmessers desselben beträgt, einmal um den Außenmantel 11 des Seekabels 10 herumgelaufen ist.

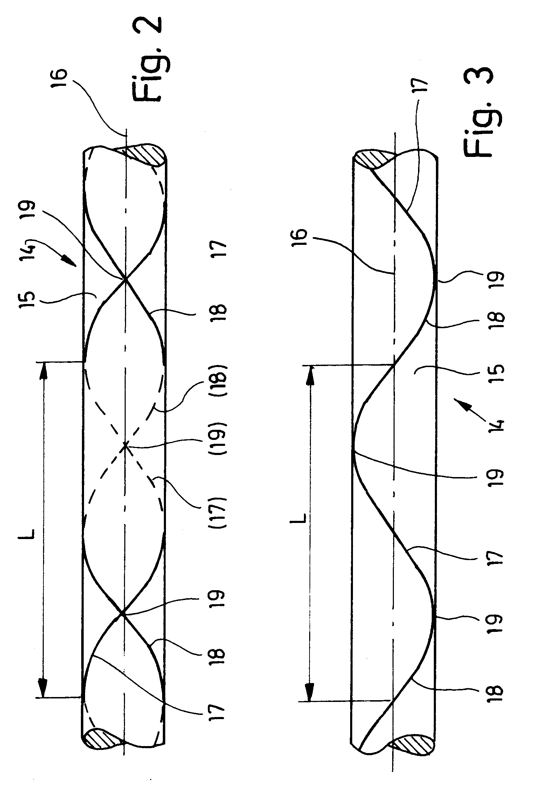

Die Fig. 2 und 3 zeigen ein Seekabel 14 nach einem zweiten Ausführungsbeispiel der Erfindung. Auch hier ist das Innenleben des Seekabels 14 - das beliebig aufgebaut sein kann - nicht näher dargestellt. Lediglich der Außenmantel 15 mit erfindungsgemäßen Markierungen ist gezeigt. Auch im vorliegenden Ausführungsbei spiel ist die Markierung aus sich entlang der Längsmittelachse 16 schlangenförmig um den Außenmantel 15 herumlaufenden Längsstreifen gebildet, und zwar zwei Längsstreifen 17 und 18. Aus Gründen der einfachen Darstellung sind die Längsstreifen 17 und 18 nur durch Striche angeordnet. Tatsächlich weisen sie eine Breite auf, die je nach Durchmesser des Seekabels 14 zwischen 1 und 5 mm betragen kann. Denkbar ist es auch, die einzelnen Längsstreifen 17 und 18 unterschiedlich breit auszubilden.

Die beiden Längsstreifen 17 und 18 laufen unterschiedlich gerichtet um den Außenmantel 15 herum. Während der Längsstreifen 17 im Uhrzeigersinn sich um den Außenmantel 15 herumschlängelt, läuft der Längsstreifen 18 gegen den Uhrzeigersinn um den Außenmantel 15 herum. Beide Längsstreifen 17 und 18 verfügen über die gleiche Steigung, die in den Fig. 2 und 3 durch das Maß L angedeutet ist. Das bedeutet, daß auf einem Abschnitt L des Seekabels 14 der Längsstreifen 17 das Seekabel 14 in die eine Richtung einmal vollständig umschlingt und der Längsstreifen 18 das Seekabel 14 in die anderen Richtung einmal vollständig umschlingt.

Die einen gleichen Verlauf aufweisenden Längsstreifen 17 und 18 kreuzen sich an gemeinsamen Knotenpunkten 19, deren Abstände die Hälfte des Maßes L eines vollständigen Umlaufs des jeweiligen Längsstreifens 17 und 18 um den Außenmantel 15 aufweist.

Die beschriebene Ausbildung und Anordnung der Längsstreifen 17 und 18 auf dem Seekabel 14 führt dazu, daß je nach Blickrichtung gegen die Seite des Seekabels 14 die beiden gegensinnigen Längsstreifen 17 und 18 unterschiedliche Verläufe aufweisen. Anhand der Darstellung in der Fig. 2 ist erkennbar, daß beide Längsstreifen 17 und 18 im gleichen Längenbereich des Seekabels 14 gleichzeitig sichtbar sind. Zwischen zwei aufeinanderfolgenden sichtbaren Abschnitten der Längsstreifen 17 und 18 verschwinden beide Längsstreifen 17 und 18 ganz auf die unsichtbare Rückseite des Seekabels 14. Die Länge dieses unsichtbaren Bereichs beträgt die halbe Länge eines gesamten Umlaufs des jeweiligen Längsstreifens 17 und 18 um das Seekabel 14. Blickt man von unten gegen das in der Fig. 2 dargestellte Seekabel 14, dann ist stets einer der beiden Längsstreifen 17 oder 18 sichtbar. Es entsteht dadurch der in der Figur gezeigte schlangenlinienförmige bzw. sinusförmige Verlauf. Durch die beiden gegensinnig verlaufenden Längsstreifen 17 und 18 sind also bei bestimmten Ansichten des Seekabels 14 entweder nur ein einziger Längsstreifen 17 oder 18 sichtbar oder nur teilweise beide Längsstreifen 17, 18.

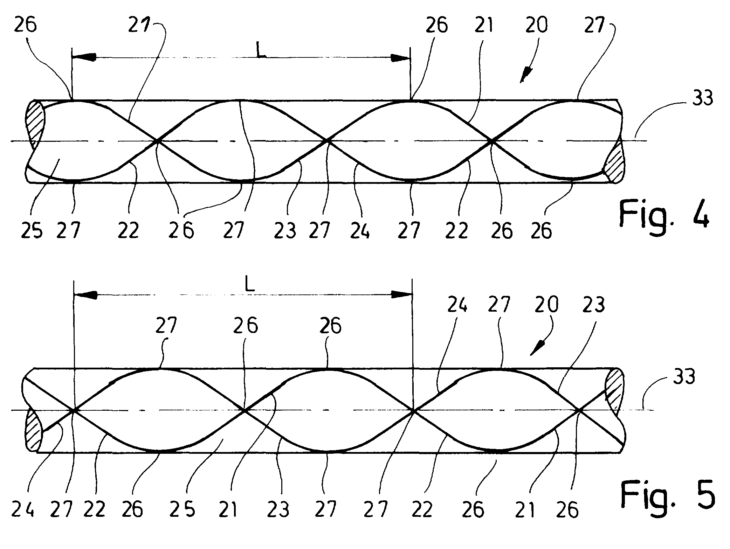

Die Fig. 4 und 5 zeigen ein drittes Ausführungsbeispiel eines Seekabels 20, bei dem die Markierung vier Längsstreifen 21 bis 24 aufweist. Die Längsstreifen 21 und 22 entsprechen den Längsstreifen 17 und 18 des Ausführungsbeispiels der Fig. 2 und 3. Die Längsstreifen 21 und 22 werden in der linken Hälfte des Maßes L der Fig. 4 sichtbar. Dahinter befinden sich unsichtbar mit gleichem Verlauf die Längsstreifen 23 und 24. In der rechten Hälfte des Maßes L in der Fig. 4 verschwinden die Längsstreifen 21 und 22 unsichtbar auf die Rückseite des Außenmantels 25 des Seekabels 20. Es erscheinen in diesem Bereich auf der Vorderseite des Außenmantels 25 sichtbar die Längsstreifen 23 und 24. Diese verschwinden hinter dem Maß L in der Fig. 4 wieder auf die Rückseite des Außenmantels 25 und die Längsstreifen 21 und 22 treten wieder sichtbar hervor.

Die Längsstreifen 21 und 22 einerseits und 23 und 24 andererseits sind untereinander alle gleich ausgebildet. Die Längsstreifen 21, 22, 23, 24 umschlingen den Außenmantel 25 in Richtung der Längsmittelachse 32 des Seekabels 20. Lediglich beginnt am oberen (linken) Knotenpunkt 26 in der Fig. 4 der Längsstreifen 21 in einer Richtung und der Längsstreifen 23 in anderer Richtung. Vom darunterliegenden Knotenpunkt 27 in der Fig. 4 gehen die Längsstreifen 22 und 24 aus, und zwar so, daß sie das Seekabel 20 in entgegengesetzten Richtungen umschlingen. Es liegen sich dadurch stets zwei Knotenpunkte 26 und 27 diametral gegenüber auf dem Außenmantel 25 des Seekabels 20. Die Knotenpunkten 26 und 27 sind stets um das Maß L-Viertel in Richtung der Längsmittelachse 16 des Seekabels 20 versetzt und außerdem stets um 90° verdreht.

Durch die vier gleich ausgebildeten und nur anders gerichtet bzw. von unterschiedlichen Knotenpunkten 26 bis 27 ausgehenden Längsstreifen 21, 22, 23 und 24 wird erreicht, daß die Markierung des Außenmantels 25 von jeder Seite des Seekabels 20 durchgehend sichtbar ist, und zwar mit dem gleichen Muster, wie das die Fig. 4 und 5 verdeutlichen, die das Seekabel 20 aus zwei jeweils um 90° versetzte Blickrichtungen zeigen.

Die in den Fig. 4 und 5 aus Vereinfachungsgründen wiederum nur als Linien gezeigten Längsstreifen 21, 22, 23 und 24 sind tatsächlich als breitere Streifen ausgebildet, und zwar mit einer Breite von vorzugsweise 1 bis 5 mm. Bei verhältnismäßig dicken Seekabeln 20 können die Streifen noch breiter sein. Das gilt auch für die übrigen Ausführungsbeispiele der Erfindung. Es ist denkbar, die einzelnen Längsstreifen 21, 22, 23 und 24 unterschiedlich breit auszubilden.

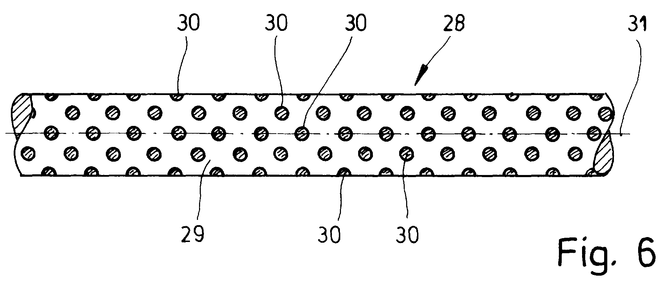

Die Fig. 6 zeigt ein viertes Ausführungsbeispiel eines Seekabels 28. Dieses Seekabel 28 weist auf einem Außenmantel 29 eine Markierung aus einer Vielzahl runder Punkte 30 auf. Die Punkte 30 sind gleichmäßig über die gesamte Länge des Seekabels 28 entlang seiner Längsmittelachse 31 auf den gesamten Umfang des Außenmantels 29 verteilt. Dazu sind die Punkte 30 im gezeigten Ausführungsbeispiel auf einem gleichmäßigen Raster angeordnet. Dieses setzt sich zusammen aus mehreren parallel zur Längsmittelachse 16 verlaufenden Reihen aus in gleichmäßigen Abständen aufeinanderfolgenden Punkten 30, wobei die Punkte 30 nebeneinanderliegender Reihen um den halben Abstand zwischen jeweils zwei Punkten 30 versetzt sind, also auf Lücke angeordnet sind. Der Abstand benachbarter Punkte 30 ist etwas größer als der Durchmesser derselben. Die untereinander gleichen Punkte 30 weisen jeweils einen Durchmesser von vorzugsweise 1 bis 10 mm auf. Der Abstand der Punkte 30 kann auch größer als ihr Durchmesser sein, vorzugsweise ist der Abstand der Punkte 30 fünf bis zwanzig mal so groß wie ihr Durchmesser.

Während die Außenmäntel der gezeigten Seekabel schwarz sind, weisen die Markierungen, also die Längsstreifen 13, 17, 18, 21, 22, 23, 24 bzw. die Punkte 30 eine hellere Farbe auf. Vorzugsweise sind die Längsstreifen 13, 17, 18, 21, 22, 23, 24 bzw. die Punkte 30 gelb ausgebildet. Es kann sich hierbei um einen gelben Farbton handeln, der fluoreszierende bzw. retroreflektierende Eigenschaften aufweist.

Denkbar ist es auch, insbesondere die Seekabel 14 und 20 mit mehreren Längsstreifen 17, 18 bzw. 21, 22, 23 und 24, als in den Fig. 1 bis 5, gezeigt zu versehen. Die einzelnen Längsstreifen 17, 18, 21, 22, 23 oder 24 können auch mit unterschiedlichen Farben versehen sein, die jedoch deutlich heller sein sollen als die schwarze Farbe der Außenmäntel. Auch die Punkte 30 auf dem Außenmantel 29 des Seekabels 28 können verschiedene Farben aufweisen.

Die Markierungen werden auf den Außenmänteln der Seekabel während der Herstellung derselben kontinuierlich aufgebracht oder in die Außenmäntel eingebracht. Das kann bei oder nach der Herstellung des jeweiligen Außenmantels geschehen.

Nach der Herstellung des jeweiligen Außenmantels kann die Markierung in Form von Längsstreifen 13, 17, 18, 21, 22, 23, 24 oder Punkten 30 außen auf den jeweiligen Außenmantel aufgedruckt oder aufgespritzt werden. In diesem Falle wird die Markierung aus einem Lack entsprechender Farbe oder auch flüssigem Kunststoff gebildet. Der Lack oder der flüssige Kunststoff müssen so beschaffen sein, daß sie eine gute Haftung auf den Außenmänteln aufweisen und dauerhaft auch in salzigem Seewasser erhalten bleiben.

Es ist weiterhin denkbar, die Markierung durch Aufsintern auf den jeweiligen Außenmantel herzustellen. Auch dies geschieht vorzugsweise nach der Herstellung des Außenmantels. Dabei kann das Aufsintern vorgenommen werden bei noch nicht vollständig ausgehärtetem Außenmantel.

Die Herstellung der Markierung kann auch während der Herstellung des jeweiligen Außenmantels des Seekabels erfolgen, indem der jeweilige Außenmantel aus verschiedenfarbigen Kunststoffen gebildet wird. Es wird dann beispielsweise im Koextrusionsverfahren der Außenmantel gleichzeitig aus dem schwarzen Kunststoff und dem andersfarbigen, beispielsweise gelben, Kunststoff zur Bildung der Markierung, insbesondere der Längsstreifen 13, 17, 18, 21, 22, 23, 24, gebildet.

Die in den Fig. 1 bis 5 gezeigten Längsstreifen 13, 17, 18, 21, 22, 23, 24 verlaufen durchgehend über die gesamte Länge des jeweiligen Seekabels, schlängeln sich also fortwährend, das heißt wiederholt bzw. mehrfach um den Außenmantel herum.

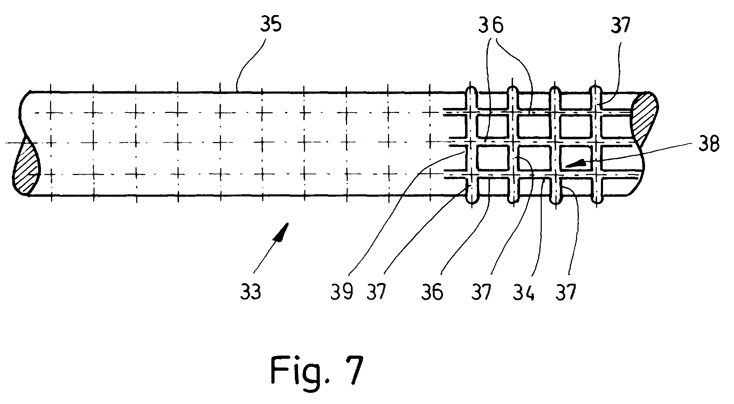

Die Fig. 7 zeigt ein Seekabel 33, bei dem die Markierung aus einem Netz 34 gebildet ist. Das Netz 34 umgibt den Außenmantel 35 des Seekabels 33. Das Netz 34 ist im gezeigten Ausführungsbeispiel aus in Längsrichtung des Seekabels 33 verlaufenden Längssträngen 36 und quer dazu gerichteten Quersträngen 37 gebildet, die den Außenmantel 35 ununterbrochen umgeben. Im vorliegenden Falle ist der Abstand zwischen jeweils zwei benachbarten, parallelen Längssträngen 36 etwa so groß wie der Abstand zwischen zwei benachbarten, parallelen Quersträngen 37. Zwischen den Längssträngen 36 und Quersträngen 37 werden dadurch viereckige Durchbrüche 38 geschaffen. Es ist aber auch möglich, die Abstände zwischen benachbarten Längssträngen 36 kleiner oder größer zu wählen als die Abstände zwischen benachbarten Quersträngen 37. Ebenso können die Längsstränge auch schräg zur Längsachse des Seekabels 33 verlaufen oder sich schlangenförmig um dieses herumwinden. Verbunden sind solche Längsstränge auch durch Querstränge, die gegebenenfalls schräg zur Längsachse des Seekabels 33 verlaufen können, damit sie die Längsstreifen rechtwinklig schneiden.

Die Längsstränge 36 und Querstränge 37 schneiden sich in Knotenpunkten 39. In diesen Knotenpunkten 39 sind die Längsstränge 36 mit den Quersträngen 37 gleichzeitig einstückig verbunden. Die Längsstränge 36 und die Querstränge 37 weisen vorzugsweise gleich große runde Querschnitt auf.

Aufgebracht ist das Netz 34 auf den Außenmantel 35 nach der Herstellung desselben. Zu diesem Zweck wird nach der Extrusion des Außenmantels 35 auf die Seele des Seekabels 37 in einem zweiten Extrusionsschritt das Netz 34 auf den Außenmantel 35 von außen aufextrudiert.

Das Netz 34 und der Außenmantel 35 sind vorzugsweise aus Kunststoff, insbesondere einem gleichen Kunststoff, gebildet. Hinsichtlich der Farbe unterscheidet sich das Netz 34 vom Außenmantel 35. Beispielsweise verfügt das Netz 34 über eine gelbe Farbe mit gegebenenfalls fluoreszierenden Eigenschaften, während der Außenmantel 35 schwarz ist. Dann erscheinen die Durchbrüche 38 zwischen den Längsstränge 36 und den Quersträngen 37 schwarz, während zwischen benachbarten Durchbrüchen 38 sich die von den Längssträngen 36 und den Quersträngen 37 gebildete gelbe Markierung befindet.

Abweichend von den gezeigten Ausführungsbeispielen können die Markierungen beliebige andere Gestaltungen aufweisen. Beispielsweise können Querstreifen verwendet werden, Längsstreifen, die parallel zur Längsmittelachse des Seekabels verlaufen oder Punkte mit eckigen oder unrunden Flächen. Auch ist es denkbar, die Längsstreifen oder andere Streifen durch eine Reihe mit kurzen Abständen aufeinanderfolgender Punkte zu bilden oder die durchgehenden Längs- oder Querstreifen gelegentlich zu unterbrechen. Darüber hinaus ist es denkbar, die Anzahl der Längsstreifen beliebig zu variieren oder Längsstreifen und Punkte miteinander zu kombinieren.

### Bezugszeichenliste:

- 10: Seekabel
- 11: Außenmantel
- 12: Längsmittelachse
- 13: Längsstreifen
- 14: Seekabel
- 15: Außenmantel
- 16: Längsmittelachse
- 17: Längsstreifen
- 18: Längsstreifen
- 19: Knotenpunkt
- 20: Seekabel
- 21: Längsstreifen
- 22: Längsstreifen
- 23: Längsstreifen
- 24: Längsstreifen
- 25: Außenmantel
- 26: Knotenpunkt
- 27: Knotenpunkt
- 28: Seekabel
- 29: Außenmantel
- 30: Punkt
- 31: Längsmittelachse
- 32: Längsmittelachse
- 33: Seekabel
- 34: Netz
- 35: Außenmantel
- 36: Längsstrang
- 37: Querstrang
- 38: Durchbruch
- 39: Knotenpunkt

## Patentansprüche

1. Kabel, insbesondere Unterwasserkabel (Seekabel), mit einer vorzugsweise mehrere Leiter aufweisenden Kabelseele und einem Außenmantel (11, 15, 25, 29), **dadurch gekennzeichnet,** daß der Außenmantel (11, 15, 25, 29) mindestens eine von außen sichtbare Markierung aufweist, die über eine sich von der Farbe des Außenmantels (11, 15, 25, 29) abhebende Farbe verfügt.

2. Kabel nach Anspruch 1, **dadurch gekennzeichnet,** daß die Markierung aus mindestens einem in Längsrichtung des Außenmantels (11, 15, 25) durchgehend verlaufenden Längsstreifen (13; 17, 18; 21, 22, 23, 24) bzw. Strich gebildet ist.

3. Kabel nach einem der vorhergehenden Ansprüche, **dadurch gekennzeichnet,** daß der oder jeder Strich bzw. Längsstreifen (13; 17, 18; 21, 22, 23, 24) spiralförmig um den Außenmantel (11, 15, 25) herum verläuft, insbesondere der oder jeder Längsstreifen (13; 17, 18; 21, 22, 23, 24) bzw. Längsstrich schlangen- und/oder spiralförmig wiederholt um den Außenmantel (11, 15, 25) durchgehend herumläuft.

4. Kabel nach einem der vorhergehenden Ansprüche, **dadurch gekennzeichnet,** daß mehrere spiralförmige Längsstreifen (17, 18; 21, 22, 23, 24) nebeneinanderliegend vorgesehen sind, wobei insbesondere die Zuordnung der schlangen- bzw. spiralförmigen Längsstreifen (17, 18; 21, 22, 23, 24) so getroffen ist, daß sich mindestens einige Längsstreifen (17, 18; 21, 22, 23, 24) bereichsweise berühren und/oder kreuzen.

5. Kabel nach einem der vorhergehenden Ansprüche, **dadurch gekennzeichnet,** daß die Markierung aus einer Vielzahl von Punkten (30) und/oder Flächen gebildet ist, wobei vorzugsweise die Punkte (30) und/oder Flächen so in Längsrichtung aneinandergereiht sind, daß sie mindestens eine unterbrochene Spirallinie um den Außenmantel bilden, und wobei vorzugsweise der Abstand der Punkte (30) oder dergleichen größer ist als der Durchmesser der Punkte (30) oder dergleichen.

6. Kabel nach einem der vorhergehenden Ansprüche, **dadurch gekennzeichnet,** daß die Punkte (30) und/oder Flächen auf einem vorzugsweise regelmäßigen Raster angeordnet sind, insbesondere derart, daß sie sich über die gesamte Fläche des Außenmantels erstrecken, und zwar vorzugsweise gleichmäßig verteilt.

7. Kabel nach einem der vorhergehenden Ansprüche, **dadurch gekennzeichnet,** daß die Markierung als ein den Außenmantel (35) umgebendes Netz (34) ausgebildet ist.

8. Kabel nach einem der vorhergehenden Ansprüche, **dadurch gekennzeichnet,** daß die farbige Markierung durch von außen auf den Außenmantel (11, 15, 25, 29) aufgespritzte oder aufgedruckte Farbe gebildet ist.

9. Kabel nach einem der vorhergehenden Ansprüche, **dadurch gekennzeichnet,** daß die Markierung bei der Herstellung des Außenmantels (11, 15, 25, 29) aus einem Material, vorzugsweise Kunststoff, mit einer von der Farbe des Außenmantels (11, 15, 25, 29) abweichenden Farbe gebildet ist.

10. Kabel nach einem der vorhergehenden Ansprüche, **dadurch gekennzeichnet,** daß die Markierung aus einem Material anderer Farbe, vorzugsweise einem andersfarbigen Kunststoff, durch insbesondere Sintern und/oder Extrudieren auf die Oberfläche des Außenmantels (11, 15, 25, 29) aufgebracht ist.

11. Kabel nach einem der vorhergehenden Ansprüche, **dadurch gekennzeichnet,** daß die Markierung aus einer Vielzahl vorzugsweise regellos auf den Außenmantel verteilter von Punkten oder dergleichen durch insbesondere in das Kunststoffmaterial zur Herstellung des Außenmantels (11, 15, 25, 29) eingemischte Farbpartikel und/oder Farbpigmente gebildet ist.

12. Kabel nach einem der vorhergehenden Ansprüche, **dadurch gekennzeichnet,** daß die Markierung eine hellere Farbe aufweist als der Außenmantel (11, 15, 25, 29), wobei vorzugsweise die hellere Farbe der Markierung fluoreszierende und/oder retroreflektierende Eigenschaften aufweist.

13. Kabel nach einem der vorhergehenden Ansprüche, **dadurch gekennzeichnet,** daß bei einer schwarzen Farbe des Außenmantels (11, 15, 25, 29) die Markierung eine gelbe Farbe aufweist.
